# EUROPEAN PATENT SPECIFICATION

(11) **EP 3 555 796 B1**
(45) Date of publication and mention of the grant of the patent: **27.05.2020**
(21) Application number: 18710609.1
(22) Date of filing: 23.02.2018
(51) Int. Cl.: G06Q 20/02, G06Q 20/04, G06Q 20/06, G06Q 20/36, G06Q 20/38, H04L 9/14, G06F 21/64, H04L 9/08, H04L 29/06, H04W 12/04, H04L 9/32

(54) **KEY ESTABLISHMENT AND DATA SENDING METHOD AND APPARATUS**
SCHLÜSSELERZEUGUNG SOWIE DATENSENDEVERFAHREN UND -VORRICHTUNG
PROCÉDÉ ET APPAREIL D'ÉTABLISSEMENT DE CLÉ ET D'ENVOI DE DONNÉES

(30) Priority: 24.02.2017 CN 201710102824
(43) Date of publication of application: 23.10.2019
(73) Proprietor: Alibaba Group Holding Limited, Grand Cayman (KY)
(72) Inventor: LI, Yi, Hangzhou, Zhenjiang 311121 (CN)
(74) Representative: Conroy, John
(86) International application number: PCT/US2018/019464
(87) International publication number: WO 2018/156924

(56) References cited:
- WO-A1-2016/015041
- WO-A1-2017/027438
- US-A1- 2007 157 031
- Alfred J Menezes ET AL: "Handbook of Applied Cryptography- chapter 13 - Key Management Techniques", , 16 October 1996 (1996-10-16), XP055467436, Baton Rouge ISBN: 978-0-429-46633-5 Retrieved from the Internet: URL:http://cacr.uwaterloo.ca/hac/about/cha p13.pdf [retrieved on 2018-04-16]

## Description

### Claim of Priority

This application claims priority to Chinese Patent Application No. 201710102824.3 filed on February 24, 2017, the entire contents of which are hereby incorporated by reference.

### Technical Field

The present application relates to the field of computer technologies, and in particular, to a data sending method and apparatus.

### Background Art

With the development of information technology, the information technology has brought great convenience to people's work and life. In the field of information technology, information is stored and transmitted by using data as a carrier, and data can be stored as a binary number in a storage medium of a computing device. The data mentioned here may be text, symbol, video or audio, and all other elements that can be identified by the computing device.

Data, as a carrier of information, usually has certain value. Especially in the age of big data, each unit tends to accumulate a large amount of data in its operation or service process, and the data may have certain use value for carrying out some businesses. In order to make full use of the value of data, two parties holding data may exchange data with each other to take data required by themselves.

In order to make it convenient for both parties of the data exchange to find an appropriate data exchange object, a data exchange platform came into being. The data exchange platform can show data exchange information issued by a data holder, so that the information can be easily found by a data demander. At the same time in a data exchange process, the data exchange platform, as an intermediary, may receive data from a data holder, and then send the data to a data demander. In this way, it is possible that the data exchange platform uses the data exchanged between the both parties for other purposes, or changes the data without authorization before sending the data to a receiver, causing damages to the interests of the parties of the data exchange. That is, in an existing data exchange process, the data security is relatively low. Different key management techniques utilizing key distribution and key translation centers has been disclosed by prior art XP055467436. In WO2017027438, system and method for achieving authorization in confidential group communications in terms of an ordered list of data blocks representing a tamper-resistant chronological account of group membership updates has been disclosed, wherein blockchains are utilized against tampering.

### Summary of the Invention

The embodiments of the present application provide a data sending method for solving the problem of low data security in the existing data exchange process.

The invention is defined by independent claims 1 and 15. Further embodiments are defined by the dependent claims.

The embodiments of the present application further provide a data sending method for solving the problem of low data security in the existing data exchange process.

The embodiments of the present application further provide a data sending apparatus for solving the problem of low data security in the existing data exchange process.

At least one of the above technical solutions adopted by the embodiments of the present application can achieve the following beneficial effects:
During data exchange, a data exchange platform writes a data exchange agreement achieved between a first user and a second user who exchange data into a block chain. The data exchange platform then receives a first key, sent by a first terminal corresponding to the first user, for decrypting encrypted first data. The first terminal sends the encrypted first data to a second terminal corresponding to the second user. The data exchange platform sends the first key to the second terminal, and the second terminal decrypts the received encrypted first data based on the first key, so as to obtain the first data. It is apparent that the data exchange platform keeps clear of the exchanged first data in the data exchange process, thereby avoiding the risk that the first data may be used by the data exchange platform for other purposes, enhancing the data security in the data exchange process, and meanwhile the data exchange platform.

### Brief Description of the Drawings

The accompanying drawings described herein are used to provide a further understanding of the present application, and construct a part of the present application. Exemplary embodiments of the present application and illustrations thereof are used to explain the present application, and do not constitute an improper limitation on the present application. In the drawings:
FIG. 1 is a schematic flowchart of implementing a data sending method according to an embodiment of the present application;
FIG. 2 is a schematic diagram of an implementation scenario of a data sending method according to an embodiment of the present application;
FIG. 3 is a schematic flowchart of implementing a data transaction method according to an embodiment of the present application; and
FIG. 4 is a specific schematic structural diagram of a data sending apparatus according to an embodiment of the present application.
FIG. 5 is a flowchart illustrating another example of a computer-implemented method for secure data transactions, according to an embodiment of the present application.

### Detailed Description

To make objectives, technical solutions and advantages of the present application more comprehensible, technical solutions of the present application are described clearly and completely through specific embodiments of the present application and corresponding accompanying drawings. Apparently, the described embodiments are merely some embodiments rather than all embodiments of the present application. Based on the embodiments of the present application, all other embodiments derived by persons of ordinary skill in the art without any creative effort shall fall within the protection scope of the present application.

As described in the Background, data, as a carrier of information, usually has certain value. Especially, in the age of big data, big data is of great value for the government and enterprises to carry out various types of work. Information extracted from the big data can help the government and enterprises to make better decisions. For example, large social networking sites usually accumulate a large amount of user data, which not only records personal identity information of users but also reflects the users' personal hobbies, living habits, personal relationship, and other information to a certain extent. The information contained in the data has great use value for carrying out subsequent businesses, and its use value, for example, can help marketing companies to push advertisements to users precisely.

In order to make full use of the value of data, data holders may exchange data with each other to dig out valuable information from the exchanged data, thereby promoting the development of their own businesses. Thus, in order to make it convenient for data demanders to seek for useful data for themselves, both parties of data exchange may exchange data through a data exchange platform.

However, because data is reproducible, the ownership of data is not as clear as that of a real object. When a real object is transferred from party A to party B, party A loses the ownership of the real object. However, when data is transferred from one party to another, if the data passes through a third party in this process, the third party may copy the data, thereby owning the data. This may damage the interests of both parties of data exchange.

The data exchange platform can play not only a role of matching exchange data between both parties, but also a role of a guarantor, i.e., guaranteeing the interests of both parties in the data exchange process. In the existing data exchange process, in order to prevent the situation that, after one party of data exchange sends data, the other party does not send its own data, the data exchange platform may acquire data of both parties of the data exchange first, and then separately send the data to both parties of the data exchange, thereby preventing either party from reneging a promise. In this way, the data exchange platform may have a chance of using data for other purposes. This will lead to low data security during exchange. In order to solve this problem, the present application provides a data sending method. The data sending method provided in the present application may be executed by a data exchange platform, and the data exchange platform may be software, hardware, or a combination of software and hardware for implementing this method.

Hereinafter, the technical solution provided in each embodiment of the present application is described in detail with reference to the accompanying drawings.

### Embodiment 1

In order to solve the problem of low data security in the existing data exchange process, Embodiment 1 of the present application provides a data sending method. In this embodiment of the present application, for ease of description, both parties of data exchange are referred to as a first user and a second user. The first user and the second user may be any organization or individual. The first user and the second user herein are used for distinguishing both parties of data transaction, and should not be understood as a limitation to both parties of the data transaction in the present application.

Both parties of data exchange, during the data exchange, may execute some operations by using terminal devices. For ease of description, a terminal corresponding to an operation executed by the first user is referred to as a first terminal, and a terminal corresponding to an operation executed by the second user is referred to as a second terminal. It should be noted that, in the whole data exchange process, the same user may use the same terminal, and may also use different terminals. That is, the first terminal mentioned in each process in the embodiment of the present application may be different terminals, and the second terminal may also be different terminals. The terminal here, for example, may be a personal computer, a server, a mobile terminal, or other computing devices, which is not limited in the present application.

During data exchange, both parties of the data exchange often achieve a data exchange agreement before exchanging data. The data exchange agreement here refers to an agreement on details of the data exchange achieved by both parties of the data exchange before data is exchanged. The data exchange agreement includes provisions stipulated by both parties of the data exchange in order to determine their respective rights and obligations, and the provisions are abided by both parties.

When the data exchange agreement is achieved, the first user may issue data information on the data exchange platform through the first terminal. After receiving the data information issued by the first terminal, the data exchange platform may then publish the data information. Thus, the second user who is interested in the data information, after seeing the data information, may send an ordering request for the data information to the data exchange platform through the second terminal. The data exchange platform receives the ordering request of the second terminal for the published data information, and sends the request to the first terminal. After the first terminal makes a confirmation, the data exchange platform may receive confirmation information sent by the first terminal for the ordering request, thereby achieving the data exchange agreement.

The above briefly describes a process of achieving the agreement. In actual applications, both parties of the data exchange may decide details of the agreement through repeated negotiations. The data exchange agreement may specifically include identity information of both parties of the data exchange, feature information of exchanged data, data use specifications and punitive measures in breach of the agreement that are abided by both parties, and other information. In this way, after receiving the data, the receiver may take corresponding measures on the basis of the agreement if finding that the data does not conform to the description in the agreement.

In the agreement, the feature information of data exchanged between both parties may include at least one of the following: a message digest for verifying integrity of the data, and baseline information for summarizing specific content of the data. For the first data, the feature information of the first data then includes at least one of the following: a message digest for verifying integrity of the first data, and baseline information for summarizing specific content of the first data.

The message digest is a fixed-length value uniquely corresponding to a message or document, the value being determined based on a one-way hash algorithm. Thus, when data to be exchanged is modified, the message digest of the data may also be changed. Commonly used one-way hash algorithms include: a Message Digest Algorithm 5 (MD5), a Secure Hash Algorithm (SHA), a Message Authentication Code (MAC), and so on.

Based on the message digest of the first data contained in the agreement, after receiving the encrypted data, the second user may carry out integrity check on the encrypted data to judge whether the received data has been modified. Meanwhile, an integrity check value may also become a basis for use in future disputes between both parties of the data exchange.

The baseline information for summarizing specific content of the first data may be, for example, the type of data that should be included in the first data, or some specific conditions that the data in the first data should satisfy, or effects that can be achieved by the data in the first data in the present application, and so on. Based on the information, the second terminal may check the specific content of the first data, thus preventing the second user from being deceived, and avoiding losses to its own interests.

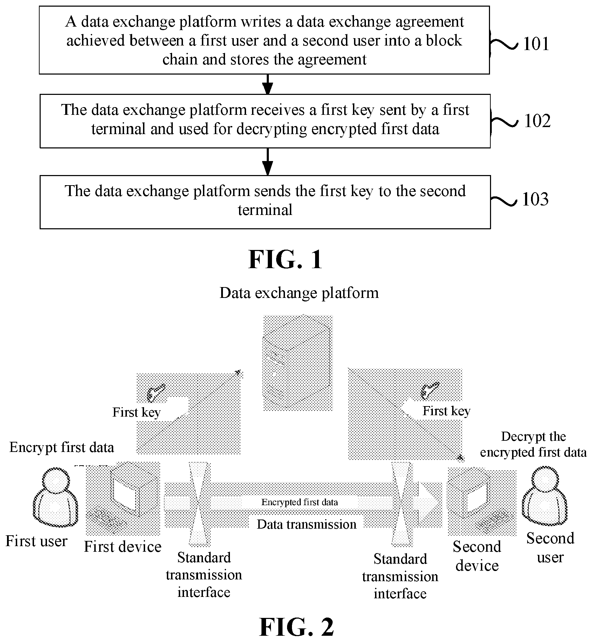

The above describes a process of achieving a data exchange agreement by both parties of data exchange before sending data. A process of sending data by both parties of data exchange in the present application, that is, a data sending method provided in the present application, will be then introduced in detail below. A schematic flowchart for implementing the method is shown in FIG. 1. The method includes the following steps:
Step 101: A data exchange platform writes a data exchange agreement achieved between a first user and a second user into a block chain and stores the agreement.

In the era of information technology, an agreement may also be stored in a storage medium of a computing device in the form of data, and data stored in the storage medium data may have a risk of being modified. In order to prevent both parties of data exchange from modifying the agreement without authorization, and enhance the security of the agreement data, the data exchange platform may be used as a third party to save the agreement.

However, if the agreement is stored by the data exchange platform, there will be a risk that the data exchange platform may modify the agreement. If the data exchange platform colludes with one party of the data exchange to modify the agreement, the interests of the other party will be damaged. In order to further enhance the security of the agreement data and enhance the credibility of the data exchange platform, during the storage of the agreement, a block chain technology may be used for storing the data exchange agreement achieved between the first user and the second user.

The block chain technology is a decentralized, detrusted, tamper-proof distributed data storage technology. A data structure stored by using the block chain technology is a chained data structure. Data in the chained data structure can be changed only in an incremental manner. Data already recorded will keep the initial state, and will not be covered.

Meanwhile, the block chain follows a consensus mechanism when recording data. When a node records data, the recorded data can be recorded in each node of the block chain only after obtaining the consensus of most nodes in the block chain. This greatly reduces the possibility that the stored data is illegal data, thus greatly reducing the possibility of the agreement being tampered.

The consensus mechanism used in the block chain technology may be, for example, a prove-of-work mechanism, a prove-of-stake mechanism, a delegated proof-of-stake mechanism, a verification pool mechanism, and so on. If it is intended to change existing data in the block chain, the only option is to replace the original data by forging a side chain. The tampering costs are huge in terms of technical difficulty, time consumption, and labor use. It is almost impossible to accomplish this under the consensus mechanism of the block chain.

It can be concluded through the above analysis that the embodiment of the present application stores a data exchange agreement by means of a block chain technology, which can effectively avoid the possibility of the agreement being tampered, and greatly enhance the security of the data exchange agreement.

Step 102: The data exchange platform receives a first key sent by a first terminal and used for decrypting encrypted first data.

The first data mentioned here is data that the first user expects to send to the second user. Thus, the first user here is a sender of the first data, and the second user is a receiver of the first data. Of course, in the computer field, it should be clear to persons skilled in the art that the so-called sending data between users, in actual operations, may be a user sending data to a terminal of another user through a terminal thereof.

In order to prevent data from being stolen by a third party other than both parties of the exchange, the first data may be encrypted, and then sent to the second terminal. In cryptography, encryption is used to hide plaintext information, so that the information is not readable in the absence of a decryption key, thereby enhancing the security in data transmission.

The data is transmitted through the data interaction platform after being encrypted, but this still cannot fully prevent the encrypted first data from being used by the data exchange platform. For example, the data may be cracked by the data exchange platform. The encrypted first data may be then sent directly by the first terminal to the second terminal, and the data exchange platform keeps clear of the exchanged data, thus further enhancing the security in data transmission.

The data may be encrypted by the first terminal using a variety of encryption methods. For example, the first data may be encrypted by using a symmetric encryption algorithm. In this case, the first key here is a key used to encrypt the first data. In this way, the data exchange platform determines a key for decrypting the encrypted first data by receiving the key that is sent by the first terminal and used for encrypting the first data. Or, the first terminal may also encrypt the first data by using an asymmetric encryption algorithm, and encrypt the first data with a public key sent by the data exchange platform. In this way, the data exchange platform only needs to determine a private key for decrypting the encrypted data.

In order to restrict both parties of data exchange, it is preferred that the first key is sent by the data exchange platform at the right time instead of being directly sent by the first terminal to the second terminal. That is, after the first terminal encrypts the first data by using a symmetric encryption algorithm, the first key used in the encryption may be sent to the data exchange platform. After receiving the key sent by the first terminal, the data exchange platform may send the key to the second terminal by performing step 103.

Step 103: The data exchange platform sends the first key to the second terminal.

In this way, the second terminal, after receiving the first data sent by the first terminal, may decrypt the received encrypted first data based on the first key to obtain the first data. The second terminal is a terminal corresponding to the second user.

Similarly, when sending data to the first terminal, the second terminal may also encrypt the data by using a key. Here, the to-be-exchanged data held by the second user is referred to as second data. After encrypting the second data, the second terminal sends the encrypted second data to the first terminal, and then sends a second key for decrypting the encrypted data to the data exchange platform. The platform then sends the key to the first terminal, such that the first terminal can decrypt the encrypted second data by using the key to obtain the second data, thus implementing data exchange between both parties. In this process, the data exchanged between both parties does not pass the data exchange platform, thereby enhancing the security of the exchanged data.

It should be noted that, in the embodiment of the present application, for ease of description, the data held by the first user is referred to as the first data, the data held by the second user is referred to as the second data, and the process of exchanging data by both parties is a process of exchanging the first data and the second data with each other. It can be understood that the terms "first" and "second" used in the embodiment of the present application are used for distinguishing different described objects, and do not refer to particular objects.

In order to further enhance the data security and to prevent damage to the interests of either party, after the keys sent by both parties for the encrypted data are received, it is also possible to send the keys to both parties after confirmation information sent by both parties for the data is received, so as to prevent the case that one party does not send the key after receiving the data, which greatly harms the interests of the other party. For example, after sending the first key to the second terminal, the data exchange platform sends the second key to the first terminal after receiving the confirmation information sent by the second terminal for the first data. The confirmation information for the first data indicates that the second user determines that the first data conforms to the description in the agreement, thus effectively protecting the interests of the second user. Likewise, after receiving the confirmation information sent by the second user for the first data, the data exchange platform may also receive confirmation information sent by the first terminal for the second data. The confirmation information for the second data indicates that the first user determines that the second data conforms to the description in the agreement.

Some types of data can be exchanged through a platform. The data may be, for example, data that the user does not care whether it is obtained by a third party, or data whose data value cannot be acquired through duplication. These types of data do not need to be encrypted, thus saving computing resources and storage resources. For ease of description, data that can be exchanged through a platform is referred to as third data.

Hereinafter, a data exchange method provided in the present application is illustrated in detail by using an example in which to-be-exchanged data of the second user is the third data that can be exchanged through the data exchange platform, and the technology for encrypting the first data to be exchanged is a symmetric encryption technology. The includes the following steps:
Step 201: A data exchange platform writes a data exchange agreement achieved between a first user and a second user into a block chain and stores the agreement.
Step 202: The data exchange platform receives a first key sent by a first terminal and used for decrypting encrypted first data.
Step 203: The first terminal sends the encrypted first data to a second terminal.
Step 204: The second terminal sends third data to the data exchange platform.

It should be noted that the present application does not limit the sequence of executing step 202, step 203, and step 204.

Step 205: The data exchange platform sends the received first key to the second terminal.

Because the second user sends the third data to the data exchange platform directly, the data exchange platform may verify the third data, and may not send the first key to the second terminal if finding that the third data does not conform to the agreement achieved by both parties, so as to avoid damage to the interests of the first user. Therefore, a specific implementation process of this step may be: sending the received first key to the second terminal when it is determined that the third data complies with the agreement of both parties.

Step 206: The second terminal decrypts the received encrypted first data according to received first key to obtain the first data.

Step 207: The data exchange platform sends the third data to the first terminal.

For the first data obtained by the second user, because the platform keeps clear of the first data, the platform will not be able to verify the authenticity thereof. In this case, the first data is verified by the second terminal. During the verification, the second terminal may acquire feature information of the first data agreed on by both parties in the transaction agreement. Specifically, the feature information may be acquired from the agreement stored in a block chain. Definitely, when both parties negotiate the agreement, the second terminal usually also stores the agreement locally. Therefore, the second terminal may also acquire the feature information from the agreement stored by the second terminal. After acquiring the feature information of the first data in the agreement, the second terminal may check whether the acquired first data conforms to a record in the agreement according to the acquired feature information.

In this way, if the second user finds that the first data does not conform to the original agreement, the platform cannot send the third data to the first terminal, so as to avoid damage to the interests of the second user.

Thus, the third data may be sent to the first terminal when a data sending instruction sent by the second terminal is received. The data sending instruction here is an instruction for instructing the data exchange platform to send the third data to the first user. For example, the instruction may be the aforementioned confirmation information for the first data, indicating that the third data is sent to the first terminal only after the second user sends determines that the first data conforms to the description in the agreement.

However, if the user does not send the data sending instruction to the platform, the first user is unable to receive the third data. In order to avoid damage to the interests of the first data, in some cases, the third data may also be sent to the first user. For example, if the first user still does not send the confirmation information for the first data after preset duration since the first key is sent to the second user, the third data may be sent to first user at this time.

Based on the above, a specific implementation process of step 207 may be: sending the third data to the first user when it is determined that a preset condition is met. Here, the time when the preset condition is met may be after the data sending instruction sent by the second terminal is received, or after preset duration since the key is sent to the second terminal.

Heretofore, the exchange of the first data and the third data between users is implemented. This method can prevent the situation that one party does not send data to the other party after acquiring the data sent by the other party, thereby protecting the interests of both parties of data exchange.

After the completion of the data exchange, the data exchange platform may also write a record that the exchange is accomplished into a result of the data change agreement in the block chain and store the record, for subsequent use.

In the embodiment of the present application, a transmission state of the encrypted data can also be determined to prevent that the second user receives the encrypted data but claims that the encrypted data is not received, and to prevent that the first terminal does not send data to the second terminal but the first user claims to have sent the data to the second terminal. The encrypted data here is the encrypted exchanged data, for example, the aforementioned encrypted first data and encrypted second data. The transmission state includes one of the following: the encrypted data has not been transmitted, the encrypted data is being transmitted, and the encrypted data has been transmitted to the second terminal.

A specific way to determine the transmission state of the encrypted data may be as follows: the data interaction platform acquires the transmission state of the encrypted data through a predetermined monitoring program. The monitoring program may be a program used for transmitting data between both parties of data exchange. Or, a specific way to determine the transmission state of the encrypted data may also be: receiving the transmission sate of the encrypted data actively reported by the first terminal and the second terminal.

The encrypted data sent by the first terminal does not pass the data exchange platform. Therefore, if the first terminal needs to perform data exchange with multiple different terminals, because different terminals may support different data transmission modes, the first terminal needs to develop different data transmission interfaces for the different terminals. This will not only consume more human resources, but also occupy too many storage resources. The data transmission platform may then draw up a specification used during data transmission, and define a standard transmission interface used during data transmission. The standard transmission interface is a universal interface used during data transmission between terminals.

As long as a terminal of a user performing data exchange through the data transmission platform implements the standard transmission interface, the terminal can transmit data to any terminal that implements the standard interface. In the standard transmission interface defined by the data transmission platform, for example, information such as a data transmission protocol during data transmission between both parties of the data exchange may be defined. Details are not described here.

The function of the standard interface defined may also include a function of sending a data transmission state to the data exchange platform. In this way, after finishing sending the encrypted data, the data interaction platform can determine that the encrypted data has been successfully sent to the second terminal, and then a corresponding operation is performed.

Based on the embodiment of the present application, FIG. 2 shows a schematic diagram of an implementation scenario of a data sending method. After both parties achieve a data exchange agreement, a specific process of transmitting, by a first terminal, first data to a second terminal is as follows:
Step 301: The first terminal encrypts the first data to obtain encrypted data.
Step 302: The first terminal sends the encrypted data to the second terminal through an implemented standard transmission interface.

Definitely, the second terminal also implements the standard transmission interface.
Step 303: The first terminal sends a key to a data exchange platform.
Step 304: The data exchange platform sends the received key to the second terminal.
Step 305: The second terminal decrypts the encrypted data according to the received key to obtain the first data.

In the data sending method provided in Embodiment 1 of the present application, during data exchange, a data exchange platform writes a data exchange agreement achieved between a first user and a second user who exchange data into a block chain. The data exchange platform then receives a first key, sent by a first terminal corresponding to the first user, for decrypting encrypted first data. The first terminal sends the encrypted first data to a second terminal corresponding to the second user. The data exchange platform sends the first key to the second terminal, and the second terminal decrypts the received encrypted first data based on the first key to obtain the first data. It is apparent that the data exchange platform keeps clear of the exchanged first data in the data exchange process, thereby avoiding the risk that the first data may be used by the data exchange platform for other purposes, enhancing the data security in the data exchange process, and meanwhile the data exchange platform.

It should be noted that, for ease of description, an implementation of the data sending method is introduced by using an example in which the data method is executed by the data exchange platform. It can be understood that the method being executed by the data exchange platform is an exemplary illustration, and should not be understood as a limitation on this method. Next, the steps of the method provided in Embodiment 1 may be executed by a same device, or the method may be executed by different devices. For example, step 101 and step 102 may be executed by device 1; for another example, step 101 may be executed by device 1, and step 102 may be executed by device 2; and so on.

### Embodiment 2

The inventive concept of the present application is described based on the above Embodiment 1 in detail. For better understanding of the technical features, means, and effects of the present application, the data sending method of the present application is further illustrated below, thereby forming another embodiment of the present application.

The data exchange process in Embodiment 2 of the present application is similar to the data exchange process in Embodiment 1, and for some steps that are not introduced in Embodiment 2, reference may be made to in the relevant description in Embodiment 1. Details are not described herein again.

Before the implementation of the solution is introduced in detail, an implementation scenario of the solution is briefly introduced first.

In the Internet, money is also present in the form of data. Therefore, a value of data representing money may be a value of the money represented by the data. In the Internet, transfer of data representing money is usually implemented, in an actual operation, by changing numerical values identifying money. For example, if 100 yuan is transferred from account A to account B, the transfer of data is actually corresponding changes to numerical values representing money in account A and account B.

As described in Embodiment 1, data values of some types of data cannot be acquired through duplication, and such data can be transmitted through a platform. Thus, in Embodiment 2, a specific implementation process of the data sending method provided in the present application is illustrated in detail by using an example in which the third data is data representing money. For ease of description, the third data for representing money is referred to as money for short in the following. Thus, the data exchange process can be construed as a data transaction process, the first user in Embodiment 1 is a data seller, the second user is a data buyer, the data exchange platform is a data transaction platform that can provide a data transaction service for users.

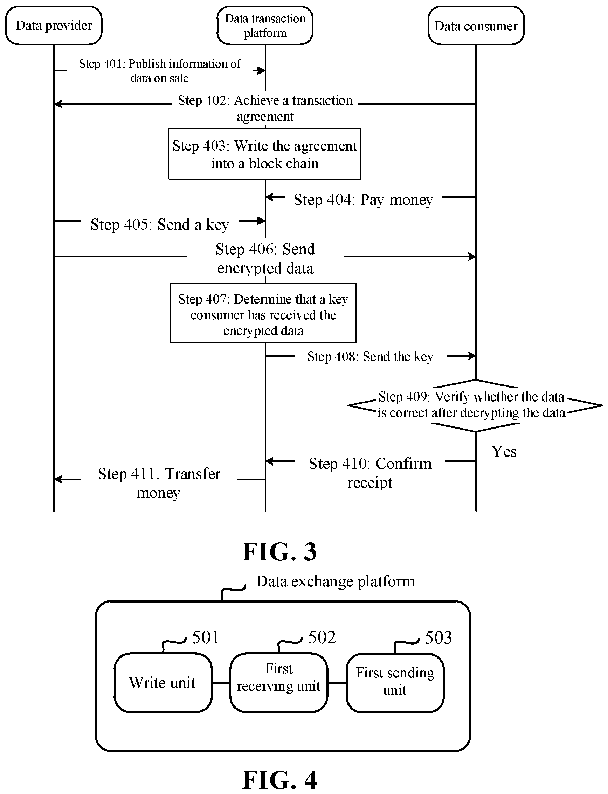

Based on the above scenario, the process of implementing data transaction in Embodiment 2 is shown in FIG. 3, which includes the following steps:
Step 401: A data seller issues information of data on sale through a data transaction platform.

The data transaction platform can support users having a data selling demand to issue information of data for sale, such that users having a data consuming demand can find required information at the data transaction platform.

Step 402: A data consumer and the data seller achieve a data transaction agreement.

The data consumer may communicate about specific transaction details, and then finally achieve the data transaction agreement. The function of the data transaction agreement is similar to the function of the data transaction agreement described in Embodiment 1, and thus is not described in detail again here.

Step 403: The data transaction platform writes the data transaction agreement achieved by both parties into a block chain.

Once the data transaction agreement is written into the block chain, the possibility of tampering on the agreement can be greatly reduced, and security of the agreement is therefore enhanced.

Step 404: The data consumer pays an amount of money agreed on in the agreement to the platform.

In the Internet, the transfer of money is actually the transfer of data representing the money. In an actual operation, this is usually implemented by changing values of data identifying money in accounts.

Step 405: The data seller encrypts the data on sale to obtain encrypted data, and then sends a key for the encryption to the data transaction platform.

The data may be encrypted by using a symmetric encryption technology, such that the key for encryption is the same as the key for decryption.

It should be noted that the embodiment of the present application does not limit the sequence of executing step 404 and step 405.

Step 406: The data seller transmits the encrypted data to a terminal of the data consumer through a terminal that implements a standard transmission interface.

As described in Embodiment 1, the standard transmission interface here is a universal interface defined by the data exchange platform and used during data transmission between terminals. The terminal of the data consumer should also implement the standard transmission interface, so as to receive data. In this way, when the data consumer and the data seller further perform data exchange with other users of the platform, there is no need to develop other transmission interfaces, thus saving human resources and storage resources.

Step 407: The data transaction platform determines that the encrypted data has been transmitted to the terminal of the data consumer.

A specific method for determining that the encrypted data has been transmitted to the terminal of the data consumer is similar to the relevant description in Embodiment 1, and thus is not described in detail again here.

Step 408: The data transaction platform sends a key to the data consumer after determining that the amount of money paid by the data consumer conforms to that recorded in the agreement.

It should be noted that the embodiment of the present application does not limit the sequence of executing step 407 and step 408.

Step 409: The data consumer decrypts the encrypted data by using the received key, and verifies whether the decrypted data conforms to the description in the agreement.

Step 410: The data consumer sends a receipt confirmation instruction to the data transaction platform through the terminal after determining that the received data conforms to the description in the agreement.

The function of the receipt confirmation instruction is similar to the function of the second data sending instruction described in Embodiment 1, and thus is not described in detail again here.

Step 411: The data transaction platform, after receiving the receipt confirmation instruction, transfers the amount of money paid by the data consumer to an account of the data seller.

If the data seller and data consumer subsequently have disputes over the data in transaction, they can safeguard their rights according to the agreement in the block chain.

In the data transaction method provided in Embodiment 2 of the present application, a data transaction platform receives a key sent by a consumer and used for encrypting data on sale, and then sends the key to a terminal of the data consumer after receiving money paid by the data consumer through the terminal. In this way, after receiving encrypted data sent by the data seller, the data consumer may decrypt the encrypted data by using the key to obtain the data sold by the data seller. Thus, in the data transaction process, the data exchange platform keeps clear of the sold data, thereby avoiding the risk that the sold data may be used by the data exchange platform for other purposes, and enhancing data security in the data transaction process.

### Embodiment 3

In order to solve the problem of low data security in the existing data exchange process, Embodiment 1 of the present application provides a data sending apparatus. A schematic structural diagram of the data sending apparatus, as shown in FIG. 4, mainly includes the following functional units:
a write unit 501 configured to write a data exchange agreement achieved between a first user and a second user into a block chain and store the agreement;
a first receiving unit 502 configured to receive a first key sent by a first terminal and used for decrypting encrypted first data, the first terminal being a terminal corresponding to the first user;
a first sending unit 503 configured to send the first key to a second terminal, such that the second terminal, after receiving the first data sent by the first terminal, decrypts the received encrypted first data based on the first key to obtain the first data, the second terminal being a terminal corresponding to the second user.

In the embodiment of the present application, there are many other specific implementations for exchanging data. In an implementation, the apparatus further includes a third receiving unit 504 configured to, before the first sending unit 503 sends the first key to the second terminal, receive a second key sent by the second terminal and used for decrypting encrypted second data; and
a third sending unit 505 configured to send the second key to the first terminal after the first sending unit 503 sends the first key to the second terminal, such that the first terminal, after receiving the encrypted second data sent by the second terminal, decrypts the received encrypted second data based on the second key to obtain the second data.

In order to guarantee the interests of the second user, in an implementation, the apparatus further includes a fourth receiving unit 506 configured to, after the first sending unit 503 sends the first key to the second terminal and before the third sending unit 505 sends the second key to the first terminal, receive confirmation information sent by the second terminal for the first data, the confirmation information for the first data indicating that the second user determines that the first data conforms to the description in the agreement.

In an implementation, the apparatus further includes a fifth receiving unit 507 configured to, after the fourth receiving unit 506 receives the confirmation information sent by the second terminal for the first data, receive confirmation information sent by the first terminal for the second data, the confirmation information for the second data indicating that the first user determines that the second data conforms to the description in the agreement.

In an implementation, the apparatus further includes a write unit 508 configured to, after the fifth receiving unit 507 receives the confirmation information sent by the first terminal for the second data, write a record that the exchange is accomplished into a result of the data exchange agreement in the block chain and store the record.

In order to guarantee the interests of both parties in data exchange, in an implementation, the apparatus further includes a second receiving unit 509 configured to, before the first sending unit 503 sends the first key to the second terminal, receive third data sent by the second terminal; and a second sending unit 510 configured to, after the first sending unit 503 sends the first key to the second terminal, send the third data to the first user when it is determined that a preset condition is met.

In an implementation, the determining that a preset condition is met specifically includes: receiving, by the data exchange platform, a data sending instruction sent by the second terminal, the data sending instruction being an instruction for instructing the data exchange platform to send the third data to the first terminal.

In an implementation, the data exchange agreement includes feature information of the first data.

The feature information of the first data includes at least one of the following: a message digest for verifying integrity of the first data; and baseline information for summarizing specific content of the first data.

In order to avoid consuming more human resources in interface development, in an implementation, the encrypted first data is transmitted to the second terminal through the first terminal that implements a standard transmission interface. The standard transmission interface is a universal interface defined by the data exchange platform and used during data transmission between terminals.

In the data sending apparatus provided in Embodiment 3 of the present application, during data exchange, a data exchange platform writes a data exchange agreement achieved between a first user and a second user who exchange data into a block chain. The data exchange platform then receives a first key, sent by a first terminal corresponding to the first user, for decrypting encrypted first data. The first terminal sends the encrypted first data to a second terminal corresponding to the second user. The data exchange platform sends the first key to the second terminal, and the second terminal decrypts the received encrypted first data based on the first key to obtain the first data. It is apparent that the data exchange platform keeps clear of the exchanged first data in the data exchange process, thereby avoiding the risk that the first data may be used by the data exchange platform for other purposes, enhancing the data security in the data exchange process, and meanwhile the data exchange platform.

In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it is improper to assume that the improvement of a method procedure cannot be implemented by using a hardware entity module. For example, a Programmable Logic Device (PLD) (for example, a Field Programmable Gate Array (FPGA)) is such an integrated circuit whose logic functions are determined by devices programmed by a user. Designers program by themselves to "integrate" a digital system into a piece of PLD, without the need to ask a chip manufacturer to design and manufacture a dedicated integrated circuit chip. Moreover, at present, the programming is mostly implemented by using logic compiler software, instead of manually manufacturing an integrated circuit chip. The logic compiler software is similar to a software complier used for developing and writing a program, and original code before compiling also needs to be written by using a specific programming language, which is referred to as a Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art also should know that a hardware circuit for implementing the logic method procedure may be easily obtained by slightly logically programming the method procedure using the above several hardware description languages and programming it into an integrated circuit.

A controller may be implemented in any suitable manner. For example, the controller may be in the form of, for example, a microprocessor or a processor and a computer readable medium storing computer readable program code (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 625D, Atmel AT91SAM, Microchip PIC18F26K20, and Silicone Labs C8051F320. A memory controller may also be implemented as a part of control logic of a memory. Those skilled in the art also know that the controller may be implemented by using pure computer readable program code, and in addition, the method steps may be logically programmed to enable the controller to implement the same function in a form of a logic gate, a switch, an application specific integrated circuit, a programmable logic controller, an embedded microcontroller, and the like. Therefore, this type of controller may be considered as a hardware component, and apparatuses included therein for implementing various functions may also be considered as structures inside the hardware component. Or, the apparatuses used for implementing various functions may even be considered as both software modules for implementing the method and structures inside the hardware component.

The system, apparatus, module or unit illustrated in the above embodiments may be specifically implemented by using a computer chip or an entity, or a product having a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, when the apparatus is described, it is divided into various units in terms of functions for respective description. Definitely, when the present application is implemented, functions of the units may be implemented in the same or multiple pieces of software and/or hardware.

Those skilled in the art should understand that the embodiments of the present invention may be provided as a method, a system, or a computer program product. Therefore, the present invention may be implemented as a complete hardware embodiment, a complete software embodiment, or an embodiment combining software and hardware. Moreover, the present invention may be a computer program product implemented on one or more computer usable storage media (including, but not limited to, a magnetic disk memory, a CD-ROM, an optical memory, and the like) including computer usable program code.

The present invention is described with reference to flowcharts and/or block diagrams of the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may also be stored in a computer readable memory that can instruct the computer or any other programmable data processing device to work in a particular manner, such that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, such that a series of operation steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

In a typical configuration, a computation device includes one or more central processing units (CPUs), an input/output interface, a network interface, and a memory.

The memory may include computer readable media such as a volatile memory, a random access memory (RAM), and/or non-volatile memory, e.g., read-only memory (ROM) or flash RAM. The memory is an example of a computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessed by the computing device. According to the definition of this text, the computer readable medium does not include transitory media, such as a modulated data signal and a carrier.

It should be further noted that the term "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. In a case without any more limitations, an element defined by "including a/an..." does not exclude that the process, method, commodity or device including the element further has other identical elements.

The present application may be described in a common context of a computer executable instruction executed by a computer, for example, a program module. Generally, the program module includes a routine, a program, an object, an assembly, a data structure, and the like used for executing a specific task or implementing a specific abstract data type. The present application may also be implemented in distributed computing environments, and in the distributed computer environments, a task is executed by using remote processing devices connected through a communications network. In the distributed computer environment, the program module may be located in local and remote computer storage media including a storage device.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply, and for related parts, reference may be made to the description of the parts in the method embodiment.

The above description is merely embodiments of the present application, and are not intended to limit the present application. For those skilled in the art, the present application may have various modifications and variations. Any modification, equivalent replacement, improvement or the like made without departing from the principle of the present application should all fall within the scope of claims of the present application.

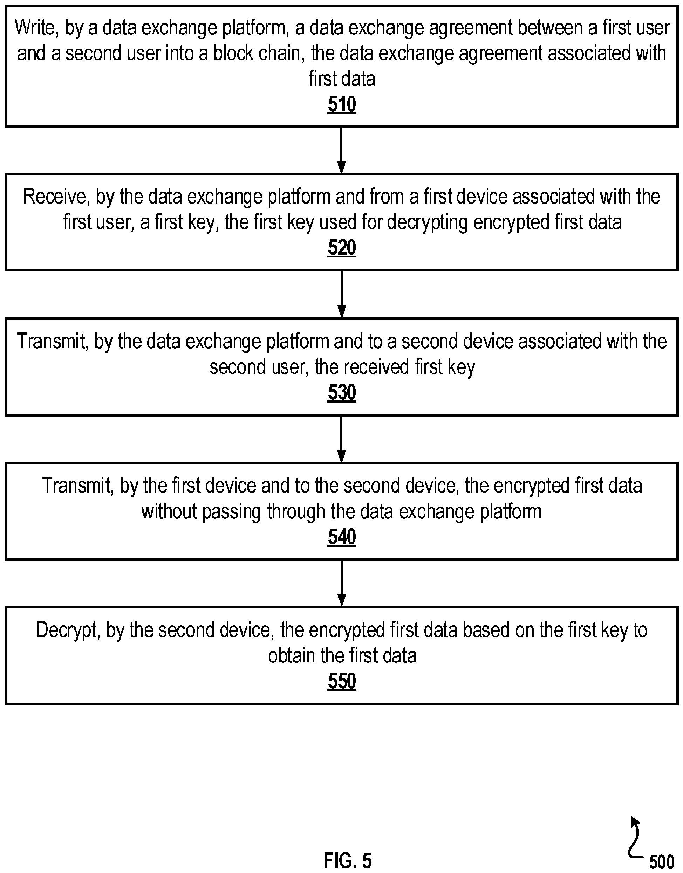

FIG. 5 is a flowchart illustrating another example of a computer-implemented method 500 for secure data transactions, according to an embodiment of the present application. For clarity of presentation, the description that follows generally describes method 500 in the context of the other figures in this description. However, it will be understood that method 500 can be performed, for example, by any system, environment, software, and hardware, or a combination of systems, environments, software, and hardware, as appropriate. In some implementations, various steps of method 500 can be run in parallel, in combination, in loops, or in any order. In some implementations, the method 500 can include additional or different (or a combination of both) steps not shown in the flowchart. In some implementations, steps can also be omitted from the method 500.

At 510, a data exchange agreement between a first user and a second user is written, by a data exchange platform, into a block chain. The data exchange agreement is associated with first data. For example, the first data is the data to be transferred from the first user to the second user according to the data exchange agreement. In some implementations, the data exchange platform stores the data exchange agreement. The data exchange agreement includes one or more of identity information of the first and second users, characteristic information of the exchanged data, data usage specifications abided by the first and second users, and punishment, abided by the first and second users, for violating the agreement, and other information associated with the exchanged data.

In some implementations, before writing the data exchange agreement into the block chain, data information associated with the first data is received, by the data exchange platform and from a first device associated with the first user, for publishing on the data exchange platform. The data information associated with the first data is then published by the data exchange platform. An order associated with the first data is received by the data exchange platform and from a second device associated with the second user. The order associated with the first data is transmitted by the data exchange platform to the first device. Confirmation information for the order associated with the first data is received by the data exchange platform and from the first device. Both the order and the confirmation information are associated with the data exchange agreement. In some implementations, the data exchange agreement can be reached using other appropriate methods. From 510, method 500 proceeds to 520.

At 520, a first key is received by the data exchange platform and from a first device associated with the first user. The first key is used for decrypting encrypted first data. For example, the first device encrypts first data to obtain encrypted first data. From 520, method 500 proceeds to 530.

At 530, the received first key is transmitted by the data exchange platform to a second device associated with the second user. In some implementations, before transmitting the received first key, a second key is received by the data exchange platform and from the second device associated with the second user. The second key is used for decrypting encrypted second data, and the second data is associated with the data exchange agreement. For example, the second data is the data to be transferred from the second user to the first user according to the data exchange agreement. After transmitting the received first key, the received second key is transmitted by the data exchange platform to the first device associated with the first user. The first device decrypts the encrypted second data, received from the second device, based on the second key to obtain the second data. From 530, method 500 proceeds to 540.

At 540, the encrypted first data is transmitted by the first device to the second device, without passing through the data exchange platform. In some implementations, instead of passing the encrypted first data through the data exchange platform, the first device transmits the encrypted first data directly to the second device to avoid the data exchange platform using the encrypted first data for other purposes (for example, actions not defined in the data exchange agreement between the first user and the second user), or making unauthorized changes to the encrypted first data before transmitting to the second device. In some implementations, the encrypted first data is transmitted to the second device through a standard transmission interface of the first device. The standard transmission interface is a universal interface defined by the data exchange platform and used for transmitting data between different devices. From 540, method 500 proceeds to 550.

At 550, the encrypted first data is decrypted, by the second device, based on the first key to obtain the first data. In some implementations, after transmitting the received first key and before transmitting the received second key, confirmation information for the first data is received by the data exchange platform and from the second device associated with the second user. The confirmation information for the first data indicates that the second user determines that the obtained first data conforms to the data exchange agreement.

In some implementations, after receiving the confirmation information for the first data, confirmation information for the second data is received by the data exchange platform and from the first device associated with the first user. The confirmation information for the second data indicates that the first user determines that the obtained second data conforms to the data exchange agreement. A record, indicating that data exchange between the first user and the second user is accomplished according to the data exchange agreement, is written by the data exchange platform in the block chain. The record is stored by the data exchange platform.

In some implementations, before transmitting the received first key, third data is received by the data exchange platform and from the second device associated with the second user. The third data is associated with the data exchange agreement. For example, the third data is data that can be exchanged through the data exchange platform. After transmitting the received first key, the received third data is transmitted by the data exchange platform to the first device associated with the first user when a predetermined condition is satisfied. In some implementations, the predetermined condition includes that the data exchange platform receives an instruction from the second device. The instruction is an instruction that instructs the data exchange platform to transmit the received third data to the first device.

In some implementations, the data exchange agreement includes characteristic information of the first data. The characteristic information of the first data is acquired by the second device. The characteristic information of the first data includes at least one of a message digest for verifying integrity of the first data, and baseline information for summarizing specific content of the first data. A determination is made, by the second device, on whether the obtained first data conforms to the data exchange agreement based on the acquired characteristic information of the first data. If it is determined that the obtained first data conforms to the data exchange agreement based on the acquired characteristic information of the first data, the second device transmits confirmation information for the first data to the data exchange platform. If it is determined that the obtained first data does not conform to the data exchange agreement based on the acquired characteristic information of the first data, the second device will not transmit confirmation information for the first data to the data exchange platform. After 550, method 500 stops.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special purpose logic circuitry, for example, a central processing unit (CPU), a field programmable gate array (FPGA), or an application-specific integrated circuit (ASIC). In some implementations, the computer or computer-implemented system or special purpose logic circuitry (or a combination of the computer or computer-implemented system and special purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system of some type, for example LINUX, UNIX, WINDOWS, MAC OS, ANDROID, IOS, another operating system, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special purpose logic circuitry, for example, a CPU, an FPGA, or an ASIC.

Computers for the execution of a computer program can be based on general or special purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device.

Non-transitory computer-readable media for storing computer program instructions and data can include all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity, a multi-touch screen using capacitive or electric sensing, or another type of touchscreen. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface," or "GUI," can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 alb/g/n or 802.20 (or a combination of 802.11x and 802.20 or other protocols consistent with the present disclosure), all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A method for sending first data from a first terminal directly to a second terminal, comprising:
writing and storing, by a data exchange platform, a data exchange agreement achieved between a first user and a second user into a block chain, wherein the data exchange agreement includes feature information of exchanged data, wherein the exchanged data includes the first data from the first user and to-be-exchanged data from the second user (101, 510);
receiving, by the data exchange platform, a first key sent by the first terminal and used for decrypting encrypted first data, the first terminal being a terminal corresponding to the first user, wherein the first terminal encrypts the first data to obtain the encrypted first data according to a symmetric encryption technology, the first terminal sends the first key to the data exchange platform, and the first terminal directly sends the encrypted first data to the second terminal (102, 520); and
when it is verified, by the data exchange platform, that third data received by the data exchange platform from the second terminal complies with the data exchange agreement, sending, by the data exchange platform, the first key to the second terminal, such that the second terminal, after receiving the encrypted first data sent by the first terminal, decrypts the received encrypted first data based on the first key to obtain the first data, the second terminal being a terminal corresponding to the second user, wherein the third data is the to-be-exchanged data from the second user for receiving the first data from the first user (103, 530).

2. The method of claim 1, further comprising:
sending, by the data exchange platform, the third data to the first terminal when a data sending instruction sent by the second terminal is received, wherein the third data are the to-be-exchanged data from the second user referred in the data exchange agreement, wherein the third data is exchanged through the data exchange platform to the first user.

3. The method of claim 1, further comprising:
decrypting, by the second terminal, the received encrypted first data using the first key to obtain the first data (550).

4. The method of claim 3, wherein before the step of writing and storing, by the data exchange platform, the data exchange agreement between the first user and the second user into the block chain, the method further comprises:
receiving, at the data exchange platform, data information issued by the first terminal and publishing the data information;
receiving, at the data exchange platform, an order placing request for the published data information by the second terminal, and sending the request to the first terminal; and
receiving, by the data exchange platform, confirmation information sent by the first terminal for the order placing request to achieve the data exchange agreement.

5. The method of claim 1, wherein before the step of sending the first key to the second terminal, the method further comprises:
receiving, by the data exchange platform, a second key sent by the second terminal and used for decrypting encrypted second data; and
after the step of sending, by the data exchange platform, the first key to the second terminal, the method further comprises sending, by the data exchange platform, the second key to the first terminal, such that the first terminal, after receiving the encrypted second data sent by the second terminal, decrypts the received encrypted second data based on the second key to obtain the second data.

6. The method of claim 5, wherein after the step of sending, by the data exchange platform, the first key to the second terminal and before the step of sending the second key to the first terminal, the method further comprises receiving, by the data exchange platform, confirmation information for the first data sent by the second terminal, the confirmation information for the first data indicating that the second user determines that the first data conforms to the description in the agreement.

7. The method of claim 6, wherein after the step of receiving, by the data exchange platform, confirmation information sent by the second terminal for the first data, the method further comprises receiving, by the data exchange platform, confirmation information sent by the first terminal for the second data, the confirmation information for the second data indicating that the first user determines that the second data conforms to the description in the agreement.

8. The method of claim 7, wherein after the step of receiving, by the data exchange platform, confirmation information sent by the first terminal for the second data, the method further comprising writing and storing, by the data exchange platform, a record that the exchange is accomplished into a result of the data exchange agreement in the block chain.

9. The method of claim 1, wherein after sending, by the data exchange platform, the first key to the second terminal, the method further comprises sending, by the data exchange platform, the third data to the first user when it is determined that a preset condition is met.

10. The method of claim 9, wherein determining that the preset condition is met specifically comprises receiving, by the data exchange platform, a data sending instruction sent by the second terminal, the data sending instruction being an instruction for instructing the data exchange platform to send the third data to the first terminal.

11. The method of any one of claims 2-10, wherein:
the data exchange agreement comprises feature information of the first data;
the method further comprises obtaining, by the second terminal, the feature information, and determining, according to the feature information, whether the acquired first data conforms to the record in the agreement; and
the feature information of the first data comprises at least one of the following:
a message digest for verifying integrity of the first data; and
baseline information for summarizing specific content of the first data.

12. The method of any one of claims 2-10, wherein the encrypted first data is transmitted to the second terminal by the first terminal implementing a standard transmission interface, and the standard transmission interface comprises a universal interface defined by the data exchange platform and used for transmitting data between terminals.

13. The method of any of claims 1 to 11, wherein a transmission state of the first encrypted data is determined to include whether first encrypted data has been transmitted or has not been transmitted to the second terminal, wherein determining the transmission state of the first encrypted data includes receiving the transmission state of the first encrypted data actively reported by the first terminal and the second terminal.

14. The method of claim 1 to 4, wherein the third data is data represents money, and therein the first user is a data seller, and the second user is a data buyer.

15. A data sending system comprising at least a first terminal, a second terminal and a data exchange platform configured to perform the method of any one of claims 1-14.

## Patentansprüche

1. Verfahren zum direkten Senden von ersten Daten von einem ersten Endgerät an ein zweites Endgerät, umfassend:
Schreiben und Speichern einer Datenaustauschvereinbarung, die zwischen einem ersten Benutzer und einem zweiten Benutzer erzielt wurde, in eine Blockkette durch eine Datenaustauschplattform, wobei die Datenaustauschvereinbarung Merkmalsinformationen zu den ausgetauschten Daten umfasst, wobei die ausgetauschten Daten die ersten Daten von dem ersten Benutzer und die auszutauschenden Daten von dem zweiten Benutzer (101, 510) umfassen;
Empfangen eines ersten Schlüssels, der von dem ersten Endgerät gesendet und zum Entschlüsseln verschlüsselter erster Daten durch die Datenaustauschplattform verwendet wird, wobei das erste Endgerät ein Endgerät ist, das dem ersten Benutzer entspricht, wobei das erste Endgerät die ersten Daten verschlüsselt, um die verschlüsselten ersten Daten entsprechend einer symmetrischen Verschlüsselungstechnologie zu erhalten, das erste Endgerät den ersten Schlüssel an die Datenaustauschplattform sendet, und das erste Endgerät die verschlüsselten ersten Daten direkt an das zweite Endgerät (102, 520) sendet; und
wenn durch die Datenaustauschplattform verifiziert wird, dass dritte Daten, die durch die Datenaustauschplattform von dem zweiten Endgerät empfangen wurden, der Datenaustauschvereinbarung entsprechen, Senden des ersten Schlüssels durch die Datenaustauschplattform an das zweite Endgerät, sodass das zweite Endgerät nach dem Empfangen der von dem ersten Endgerät gesendeten verschlüsselten ersten Daten die empfangenen verschlüsselten ersten Daten basierend auf dem ersten Schlüssel entschlüsselt, um die ersten Daten zu erhalten, wobei das zweite Endgerät ein Endgerät ist, das dem zweiten Benutzer entspricht, wobei die dritten Daten die auszutauschenden Daten von dem zweiten Benutzer zum Empfangen der ersten Daten von dem ersten Benutzer (103, 530) sind.

2. Verfahren nach Anspruch 1, ferner umfassend:
Senden der dritten Daten durch die Datenaustauschplattform an das erste Endgerät, wenn eine von dem zweiten Endgerät gesendete Datensendeanweisung empfangen wird, wobei die dritten Daten die in der Datenaustauschvereinbarung genannten auszutauschenden Daten von dem zweiten Benutzer sind, wobei die dritten Daten über die Datenaustauschplattform mit dem ersten Benutzer ausgetauscht werden.

3. Verfahren nach Anspruch 1, ferner umfassend:
Entschlüsseln der empfangenen verschlüsselten ersten Daten mithilfe des ersten Schlüssels durch das zweite Endgerät, um die ersten Daten (550) zu erhalten.

4. Verfahren nach Anspruch 3, wobei vor dem Schritt des Schreibens und Speicherns der Datenaustauschvereinbarung zwischen dem ersten Benutzer und dem zweiten Benutzer in die Blockkette durch die Datenaustauschplattform das Verfahren ferner umfasst:
Empfangen von Dateninformationen, die von dem ersten Endgerät ausgegeben wurden, an der Datenaustauschplattform und Veröffentlichen der Dateninformationen;
Empfangen einer Bestellanfrage für die veröffentlichten Dateninformationen durch das zweite Endgerät an der Datenaustauschplattform, und Senden der Anfrage an das erste Endgerät; und
Empfangen von Bestätigungsinformationen, die von dem ersten Endgerät gesendet wurden, für die Bestellanfrage durch die Datenaustauschplattform, um die Datenaustauschvereinbarung zu erzielen.

5. Verfahren nach Anspruch 1, wobei vor dem Schritt des Sendens des ersten Schlüssels an das zweite Endgerät das Verfahren ferner umfasst:
Empfangen eines zweiten Schlüssels, der von dem zweiten Endgerät gesendet und zum Entschlüsseln von verschlüsselten zweiten Daten verwendet wird, durch die Datenaustauschplattform; und
nach dem Schritt des Sendens des ersten Schlüssels durch die Datenaustauschplattform an das zweite Endgerät das Verfahren ferner das Senden des zweiten Schlüssels durch die Datenaustauschplattform an das erste Endgerät umfasst, sodass das erste Endgerät nach dem Empfangen der von dem zweiten Endgerät gesendeten verschlüsselten zweiten Daten die empfangenen verschlüsselten zweiten Daten basierend auf dem zweiten Schlüssel entschlüsselt, um die zweiten Daten zu erhalten.

6. Verfahren nach Anspruch 5, wobei nach dem Schritt des Sendens des ersten Schlüssels durch die Datenaustauschplattform an das zweite Endgerät und vor dem Schritt des Sendens des zweiten Schlüssels an das erste Endgerät das Verfahren ferner das Empfangen von Bestätigungsinformationen für die von dem zweiten Endgerät gesendeten ersten Daten durch die Datenaustauschplattform umfasst, wobei die Bestätigungsinformationen für die ersten Daten anzeigen, dass der zweite Benutzer bestimmt, dass die ersten Daten der Beschreibung in der Vereinbarung entsprechen.

7. Verfahren nach Anspruch 6, wobei nach dem Schritt des Empfangens von Bestätigungsinformationen, die von dem zweiten Endgerät für die ersten Daten gesendet wurden, durch die Datenaustauschplattform das Verfahren ferner das Empfangen von Bestätigungsinformationen, die von dem ersten Endgerät für die zweiten Daten gesendet wurden, durch die Datenaustauschplattform umfasst, wobei die Bestätigungsinformationen für die zweiten Daten anzeigen, dass der erste Benutzer bestimmt, dass die zweiten Daten der Beschreibung in der Vereinbarung entsprechen.

8. Verfahren nach Anspruch 7, wobei nach dem Schritt des Empfangens von Bestätigungsinformationen, die von dem ersten Endgerät für die zweiten Daten gesendet wurden, durch die Datenaustauschplattform das Verfahren ferner das Schreiben und Speichern eines Datensatzes durch die Datenaustauschplattform umfasst, dass der Austausch die Datenaustauschvereinbarung in der Blockkette zum Ergebnis hat.

9. Verfahren nach Anspruch 1, wobei nach dem Senden des ersten Schlüssels durch die Datenaustauschplattform an das zweite Endgerät das Verfahren ferner das Senden der dritten Daten durch die Datenaustauschplattform an den ersten Benutzer umfasst, wenn bestimmt wurde, dass eine voreingestellte Bedingung erfüllt wird.

10. Verfahren nach Anspruch 9, wobei das Bestimmen, dass die voreingestellte Bedingung erfüllt wird, speziell das Empfangen einer von dem zweiten Endgerät gesendeten Datensendeanweisung durch die Datenaustauschplattform umfasst, wobei die Datensendeanweisung eine Anweisung ist, die die Datenaustauschplattform anweist, die dritten Daten an das erste Endgerät zu senden.

11. Verfahren nach einem der Ansprüche 2-10, wobei:
die Datenaustauschvereinbarung Merkmalsinformationen der ersten Daten umfasst;
das Verfahren ferner das Erhalten der Merkmalsinformationen durch das zweite Endgerät und das Bestimmen, ob die erhaltenen ersten Daten dem Datensatz in der Vereinbarung entsprechen, gemäß der Merkmalsinformationen umfasst; und
die Merkmalsinformationen der ersten Daten mindestens eins der Folgenden umfassen: einen Message Digest zum Verifizieren der Integrität der ersten Daten; und
Basisinformationen zum Zusammenfassen von spezifischem Inhalt der ersten Daten.

12. Verfahren nach einem der Ansprüche 2-10, wobei die verschlüsselten ersten Daten durch das erste Endgerät an das zweite Endgerät, das eine Standardsendeschnittstelle implementiert, gesendet werden, und die Standardsendeschnittstelle eine Universalschnittstelle umfasst, die durch die Datenaustauschplattform definiert und zum Senden von Daten zwischen Endgeräten verwendet wird.

13. Verfahren nach einem der Ansprüche 1 bis 11, wobei ein Sendezustand der ersten verschlüsselten Daten bestimmt wird, um zu umfassen, ob die ersten verschlüsselten Daten an das zweite Endgerät gesendet wurden oder nicht, wobei das Bestimmen des Sendezustands der ersten verschlüsselten Daten das Empfangen des Sendezustands der ersten verschlüsselten Daten umfasst, der durch das erste Endgerät und das zweite Endgerät aktiv gemeldet wurde.

14. Verfahren nach Anspruch 1 bis 4, wobei die dritten Daten Daten sind, die Geld darstellen, und der erste Benutzer ein Datenverkäufer ist und der zweite Benutzer ein Datenkäufer ist.

15. Datensendesystem, umfassend mindestens ein erstes Endgerät, ein zweites Endgerät und eine Datenaustauschplattform, die dazu ausgelegt ist, das Verfahren nach einem der Ansprüche 1-14 durchzuführen.

## Revendications

1. Procédé destiné à envoyer des premières données à partir d'un premier terminal directement vers un second terminal, comprenant :
l'écriture et le stockage, par une plate-forme d'échange de données, d'un accord d'échange de données conclu entre un premier utilisateur et un second utilisateur dans une chaîne de blocs, dans lequel l'accord d'échange de données comprend des informations de caractéristique de données échangées, dans lequel les données échangées comprennent les premières données du premier utilisateur et des données à échanger du second utilisateur (101, 510) ;
la réception, par la plate-forme déchange de données, d'une première clé envoyée par le premier terminal et utilisée pour déchiffrer des premières données chiffrées, le premier terminal étant un terminal correspondant au premier utilisateur, dans lequel le premier terminal chiffre les premières données pour obtenir les premières données chiffrées conformément à une technologie de chiffrement symétrique, le premier terminal envoie la première clé à la plate-forme d'échange de données, et le premier terminal envoie directement les premières données chiffrées au second terminal (102, 520) ; et
lorsqu'il est vérifié, par la plate-forme d'échange de données, que des troisièmes données reçues par la plate-forme d'échange de données à partir du second terminal sont conformes à l'accord d'échange de données, l'envoi, par la plate-forme d'échange de données, de la première clé au second terminal, de sorte que le second terminal, après avoir reçu les premières données chiffrées envoyées par le premier terminal, déchiffre les premières données chiffrées reçues en fonction de la première clé pour obtenir les premières données, le second terminal étant un terminal correspondant au second utilisateur, dans lequel les troisièmes données sont les données à échanger du second utilisateur destinées à recevoir les premières données du premier utilisateur (103, 530).

2. Procédé selon la revendication 1, comprenant en outre :
l'envoi, par la plate-forme d'échange de données, des troisièmes données au premier terminal lorsqu'une instruction d'envoi de données envoyée par le second terminal est reçue, dans lequel les troisièmes données sont les données à échanger du second utilisateur mentionné dans l'accord d'échange de données, dans lequel les troisièmes données sont envoyées par l'intermédiaire de la plate-forme d'échange de données au premier utilisateur.

3. Procédé selon la revendication 1, comprenant en outre :
le déchiffrage, par le second terminal, des premières données chiffrées reçues en utilisant la première clé pour obtenir les premières données (550).

4. Procédé selon la revendication 3, dans lequel avant l'étape d'écriture et de stockage, par la plate-forme d'échange de données, de l'accord d'échange de données entre le premier utilisateur et le second utilisateur dans la chaîne de blocs, le procédé comprend en outre :
la réception, au niveau de la plate-forme d'échange de données, d'informations de données émises par le premier terminal et la publication des informations de données ;
la réception, au niveau de la plate-forme d'échange de données, d'une demande de passation de commande pour les informations de données publiées par le second terminal et l'envoi de la demande au premier terminal ; et
la réception, par la plate-forme d'échange de données, d'informations de confirmation envoyées par le premier terminal pour la demande de passation de commande afin de se conformer à l'accord d'échange de données.

5. Procédé selon la revendication 1, dans lequel avant l'étape d'envoi de la première clé au second terminal, le procédé comprend en outre :
la réception, par la plate-forme d'échange de données, d'une seconde clé envoyée par le second terminal et utilisée pour déchiffrer des deuxièmes données chiffrées ; et
après l'étape d'envoi, par la plate-forme d'échange de données, de la première clé au second terminal, le procédé comprend en outre l'envoi, par la plate-forme d'échange de données, de la seconde clé au premier terminal, de sorte que le premier terminal, après avoir reçu les deuxièmes données chiffrées envoyées par le second terminal, déchiffre les deuxièmes données chiffrées reçues en fonction de la seconde clé pour obtenir les deuxièmes données.

6. Procédé selon la revendication 5, dans lequel après l'étape d'envoi, par la plate-forme d'échange de données, de la première clé au second terminal et avant l'étape d'envoi de la seconde clé au premier terminal, le procédé comprend en outre la réception, par la plate-forme d'échange de données, d'informations de confirmation pour les premières données envoyées par le second terminal, les informations de confirmation pour les premières données indiquant que le second utilisateur détermine que les premières données sont conformes à la description de l'accord.

7. Procédé selon la revendication 6, dans lequel après l'étape de réception, par la plate-forme d'échange de données, d'informations de confirmation envoyées par le second terminal pour les premières données, le procédé comprend en outre la réception, par la plate-forme d'échange de données, d'informations de confirmation envoyées par le premier terminal pour les deuxièmes données, les informations de confirmation pour les deuxièmes données indiquant que le premier utilisateur détermine que les deuxièmes données sont conformes à la description de l'accord.

8. Procédé selon la revendication 7, dans lequel après l'étape de réception, par la plate-forme d'échange de données, d'informations de confirmation envoyées par le premier terminal pour les deuxièmes données, le procédé comprend en outre l'écriture et le stockage, par la plate-forme d'échange de données, d'un enregistrement selon lequel l'échange a été réalisé conformément à l'accord d'échange de données dans la chaîne de blocs.

9. Procédé selon la revendication 1, dans lequel après l'envoi, par la plate-forme d'échange de données, de la première clé au second terminal, le procédé comprend en outre l'envoi, par la plate-forme d'échange de données, des troisièmes données au premier utilisateur lorsqu'il est déterminé qu'une condition prédéfinie est remplie.

10. Procédé selon la revendication 9, dans lequel la détermination que la condition prédéfinie est remplie comprend spécifiquement la réception, par la plate-forme d'échange de données, d'une instruction d'envoi de données envoyée par le second terminal, l'instruction d'envoi de données étant une instruction commandant à la plate-forme d'échange de données d'envoyer les troisièmes données au premier terminal.

11. Procédé selon l'une quelconque des revendications 2 à 10, dans lequel :
l'accord d'échange de données comprend des informations de caractéristique des premières données ;
le procédé comprend en outre l'obtention, par le second terminal,
des informations de caractéristique, et la détermination, conformément aux informations de caractéristique, selon laquelle les premières données acquises sont conformes ou non à l'enregistrement dans l'accord ; et
les informations de caractéristique des premières données comprennent au moins l'un des éléments suivants : un résumé de message pour vérifier l'intégrité des premières données ; et
des informations de base pour résumer le contenu spécifique des premières données.

12. Procédé selon l'une quelconque des revendications 2 à 10, dans lequel les premières données chiffrées sont transmises au second terminal par le premier terminal mettant en œuvre une interface de transmission standard, et l'interface de transmission standard comprend une interface universelle définie par la plate-forme d'échange de données et utilisée pour transmettre des données entre terminaux.

13. Procédé selon l'une quelconque des revendications 1 à 11, dans lequel un état de transmission des premières données chiffrées est déterminé pour indiquer si des premières données chiffrées ont été transmises ou n'ont pas été transmises au second terminal, dans lequel la détermination de l'état de transmission des premières données chiffrées comprend la réception de l'état de transmission des premières données chiffrées activement signalées par le premier terminal et le second terminal.

14. Procédé selon les revendications 1 à 4, dans lequel les troisièmes données sont des données représentant de l'argent, et dans lequel le premier utilisateur est un vendeur de données et le second utilisateur est un acheteur de données.

15. Système d'envoi de données comprenant au moins un premier terminal, un second terminal et une plate-forme d'échange de données configurés pour exécuter le procédé selon l'une quelconque des revendications 1 à 14.
